# EUROPÄISCHE PATENTANMELDUNG

(11) **EP 3 488 976 A1**
(43) Veröffentlichungstag der Anmeldung: **29.05.2019**
(21) Anmeldenummer: 17203220.3
(22) Anmeldetag: 23.11.2017
(51) Int. Cl.: B25H 1/00, B62K 11/00, E21D 20/00, B25D 17/32, B60L 15/20

(54) **SELBSTAUSRICHTENDE WERKZEUGFÜHRUNG**

(71) Anmelder: HILTI Aktiengesellschaft, 9494 Schaan (LI)
(72) Erfinder: Schmidt, Peer, 88131 Lindau (DE); Bralla, Dario, 9470 Buchs (CH); Khandozhko, Serhey, 9470 Buchs SG (CH)
(74) Vertreter: Hilti Aktiengesellschaft Corporate Intellectual Property

(57) **Zusammenfassung**

Eine selbstausrichtende Werkzeugführung (1) hat eine Halterung (5) zum Fixieren einer Handwerkzeugmaschine (6), ein Hebewerk (7) und ein selbstbalancierendes Fahrwerk (8). Die Halterung (5) ist auf dem Hebewerk (7) montiert. Ein Vortrieb (24) dient zum Anheben der Halterung (5) parallel zu einer Hubachse (25). Ein Leitstand (22) dient zum Bedienen des Vortriebs (24) durch einen Anwender. Das selbstbalancierenden Fahrwerk (8) hat zwei Räder (27) auf einer Radachse (28), einen mit den Rädern (27) gekoppelten Antrieb (21) und eine Lenkung (20) zum Bedienen des Fahrwerks (8) durch einen Bediener. Eine Anordnung von elektrischen Batterien (32, 55) ist zum Versorgen des Vortriebs (24) und des Antriebs (21) mit Strom. Eine Notstromeinrichtung (57) hat einen Ladestandsensor (58) zum Bestimmen eines Ladestands der Anordnung von elektrischen Batterien (32, 55). Eine Deaktivierungseinheit (59) deaktiviert ansprechend auf ein Unterschreiten einer Notladung durch den Ladestand den Leitstand (22).

## Beschreibung

### GEBIET DER ERFINDUNG

Die Erfindung betrifft eine selbstausrichtende Werkzeugführung und ein Steuerungsverfahren für die Werkzeugführung.

Abgehängte Decken sind ein häufig anzutreffendes Gestaltungselement in Großgebäuden, insbesondere in Industrie- und Bürogebäuden. Technische Installationen, z.B. Elektroinstallationen, Lüftungsanlagen, Beleuchtung und Schalldämmung, lassen sich zwischen der Decke des Rohbaus und der abgehängten Decke verlegen und sind für eine nachträgliche Inspektion und Wartung zugänglich. Tragende Unterkonstruktionen der Installationen und der abgehängten Decke sind mit in der Decke des Rohbaus verankerten Dübeln, Schrauben oder ähnlichen Elementen befestigt. Zum Aufbauen der abgehängten Decke werden Löcher in die Decke des Rohbaus gebohrt, in welche die Dübel eingesetzt bzw. die Schrauben eingeschraubt werden können. Eine laterale Position der Löcher ist durch die tragende Unterkonstruktion vorgegeben.

Das Bohren der Löcher ist zeitaufwändig. Der Anwender kann die hoch hängende Decke des Rohbaus nur mit einer Leiter oder einem Gerüst erreichen. Die Leiter muss unterhalb der vorgegebenen Position aufgestellt werden, der Anwender steigt die Leiter hinauf, bohrt das Loch, steigt die Leiter ab und verschiebt die Leiter zu der nächsten Position.

DE 33 28 582 A1 beschreibt ein fahrbares Deckenbohr- und Montagegerät für die Montage von Schlagdübeln in einer Zimmerdecke. Das Deckenbohrgerät basiert auf einer Schlagbohrmaschine, welche auf einer Teleskopsäule montiert ist. Die Teleskopsäule ist auf einem Fahrwagen pendelnd aufgehängt. Der Anwender kann das Deckenbohrgerät unterhalb eine gewünschten Stelle fahren, die Schlagbohrmaschine mittels der Säule zu der Zimmerdecke angeben lassen und ein Loch in die Decke bohren lassen. Eine Steuerung der Schlagbohrmaschine kann über einen Schaltschrank erfolgen. Zum Transportieren über Treppenhäuser muss das Gerät in vier Teile - Fahrwagen, Teleskopsäule, Schlagbohrmaschine und Schaltschrank - zerlegt werden.

### OFFENBARUNG DER ERFINDUNG

Eine Ausgestaltung der Erfindung betrifft eine selbstausrichtende Werkzeugführung. Die Werkzeugführung hat eine Halterung, ein Hebewerk und ein Fahrwerk. Die Halterung ist zum Fixieren einer Handwerkzeugmaschine. Auf dem Hebewerk ist die Halterung montiert. Das Hebewerk hat einen Vortrieb zum vertikalen Anheben der Halterung. Das Fahrwerk hat zwei Räder auf einer Radachse, einen mit den Rädern gekoppelten Antrieb und eine Lenkung. Das Hebewerk ist auf dem Fahrwerk starr montiert. Ein Schwerpunktsensor ist zum Erfassen einer lateralen Auslenkung des Schwerpunkts des Hebewerks gegenüber der Radachse eingerichtet. Die Lenkung ist eingerichtet, den Antrieb anzusteuern, ein der Auslenkung entgegenwirkendes Drehmoment abzugeben.

Die selbstausrichtende Werkzeugführung ermöglicht einen sehr kompakten und leichten Aufbau, indem die Zahl der Baugruppen verringert werden kann. Die dynamische Stabilisierung ermöglicht einen stabilen Stand der Werkzeugführung bereits auf einem Rad oder auf zwei Rädern.

Die Achse des Werkzeugs ist durch die Antriebssteuerung und die Räder definiert ausgerichtet. Bei einer Auslenkung des Werkzeugs aus der vorgegebenen Richtung üben die Räder aktiv ein Gegenmoment aus, welches das Werkzeug wieder korrekt ausrichtet. Dies ist insbesondere beim Ansetzen des Werkzeugs an der Decke notwendig. Sowohl Boden und Decke eines Rohbaus sind wellig und gegenüber der Horizontalen geneigt, wodurch Querkräfte auf das Werkzeug wirken. Ein frei pendelndes Werkzeug würde den Querkräften durch eine Auslenkung ausweichen und somit zu einer fehlerhaften Ausrichtung des Werkzeugs führen.

Eine Ausgestaltung der Erfindung beinhaltet eine Halterung zum Fixieren einer Handwerkzeugmaschine , ein Hebewerk und ein selbstbalancierendes Fahrwerk. Auf dem Hebewerk ist eine Halterung montiert, welche mit einem Vortrieb des Hebewerks parallel zu einer Hubachse anhebbar und absenkbar ist. Das selbstbalancierende Fahrwerk hat zwei Räder auf einer Radachse und einen mit den Rädern gekoppelten Antrieb. Das Hebewerk ist starr auf dem Fahrwerk montiert. Ein Neigungssensor erfasst eine Neigung einer Radachse des Fahrwerks gegenüber einer horizontalen Ebene. Eine Lenkung hat einen Modus S9, in welchem die Lenkung das Fahrwerk mittels des Antriebs um eine Hochachse dreht, bis die Neigung gleich Null ist. Die Werkzeugführung hat zudem einen Schwerpunktsensor zum Erfassen einer lateralen Auslenkung x des Schwerpunkts G gegenüber der Radachse. Die Lenkung ist eingerichtet, ein der Auslenkung entgegenwirkendes Drehmoment abzugeben.

Für die nur auf zwei Rädern stehende Werkzeugführung gibt immer eine Stellung, in welcher die Radachse parallel zu der Horizontalen ausgerichtet werden kann, allein durch Drehen um die Hochachse. Bei einem System mit drei oder mehr Rädern muss das Hebewerk gegenüber den Radachsen schwenkbar gelagert werden.

Eine Ausgestaltung der erfindungsgemäßen selbstausrichtenden Werkzeugführung hat eine Halterung zum Fixieren einer Handwerkzeugmaschine für die Bearbeitung einer Decke , ein Hebewerk und ein selbstbalancierendes Fahrwerk. Auf dem Hebewerk ist die Halterung montiert. Das Hebewerk hat einen Vortrieb zum Anheben der Halterung parallel zu einer Hubachse . Das selbstbalancierenden Fahrwerk hat zwei Räder auf einer Radachse , einen mit den Rädern gekoppelten Antrieb und eine Lenkung . Ein Sensor dient dem Erfassen einer Anpresskraft der Halterung , die in Richtung der Schwerkraft wirkt. Der Leitstand steuert den Vortrieb in Abhängigkeit der erfassten Anpresskraft an.

Eine Ausgestaltung der erfindungsgemäßen selbstausrichtenden Werkzeugführung hat eine Halterung zum Fixieren einer Handwerkzeugmaschine für die Bearbeitung einer Decke , ein Hebewerk und ein selbstbalancierendes Fahrwerk. Auf dem Hebewerk ist die Halterung montiert. Das Hebewerk hat einen Vortrieb zum Anheben der Halterung parallel zu einer Hubachse . Das selbstbalancierenden Fahrwerk hat zwei Räder auf einer Radachse , einen mit den Rädern gekoppelten Antrieb und eine Lenkung . Ein Kontaktsensor dient dem Erfassen eines mittelbaren Kontakts der Halterung mit der Decke . Das Fahrwerk hat eine Bremse. Die Steuerung hat einen Modus S9, in welchem die Bremse aktiviert und das Balancieren des selbstbalancierenden Fahrwerks deaktiviert ist.

Die Werkzeugführung berührt zumeist nur mit den beiden Rädern den Boden. Ein aufrechter Stand ist nur durch das Balancieren des Fahrwerks gewährleistet. Beim Bearbeiten der Decke ergibt sich ein dritter Berührpunkt, welcher für einen aufrechten Stand ohne Balancieren ausreichend sein kann. Der statische Stand ohne Balancieren kann beim Bearbeiten von Vorteil sein. Die Bremse unterstützt die Standfestigkeit.

Eine Ausgestaltung der erfindungsgemäßen selbstausrichtenden Werkzeugführung hat eine Halterung zum Fixieren einer Handwerkzeugmaschine , ein Hebewerk und ein selbstbalancierendes Fahrwerk. Die Halterung ist auf dem Hebewerk montiert. Ein Vortrieb dient zum Anheben der Halterung parallel zu einer Hubachse . Ein Leitstand dient zum Bedienen des Vortriebs durch einen Anwender. Das selbstbalancierenden Fahrwerk hat zwei Räder auf einer Radachse , einen mit den Rädern gekoppelten Antrieb und eine Lenkung zum Bedienen des Fahrwerks durch einen Bediener. Eine Anordnung von elektrischen Batterien (32,) ist zum Versorgen des Vortriebs und des Antriebs mit Strom. Eine Notstromeinrichtung hat einen Ladestandsensor zum Bestimmen eines Ladestands der Anordnung von elektrischen Batterien (32,). Eine Deaktivierungseinheit deaktiviert ansprechend auf ein Unterschreiten einer Notladung durch den Ladestand den Leitstand .

Die Werkzeugführung hat eine eigene Stromversorgung. Die Stromversorgung steht für den Betrieb des Hebewerks, ggf. der Handwerkzeugmaschine, aber auch für das Fahrwerk zur Verfügung. Bei niedrigem Ladestand wird der Anwender mit Nachdruck durch Deaktivieren des Leitstands und damit des Hebewerks und der Handwerkzeugmaschine aufgefordert die Batterien zu laden oder tauschen. Hierdurch wird vermieden, dass die Werkzeugführung aufgrund leerer Batterien und in Folge eines Ausfalls des Balancierens umfällt.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: selbstausrichtenden Werkzeugführung von vorne
- Fig. 2: selbstausrichtenden Werkzeugführung im Schnitt I-I

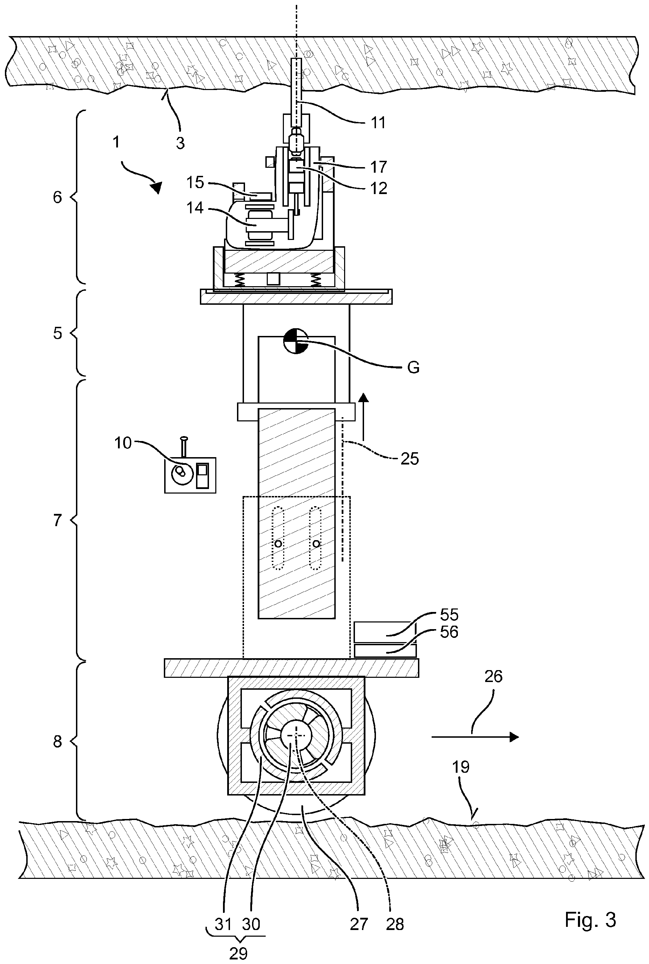

- Fig. 3: selbstausrichtenden Werkzeugführung bei Bearbeitung einer Decke im Schnitt I-I
- Fig. 4: Statusdiagramm
- Fig. 5: Diagramm zur Erläuterung zum Ausrichten (Gleichgewicht)
- Fig. 6: Diagramm zur Erläuterung zum Ausrichten in Vor- Rück Richtung
- Fig. 7: Diagramm zur Erläuterung zum Ausrichten in Querrichtung
- Fig. 8: Diagramm zur Erläuterung zum Ausrichten in Querrichtung
- Fig. 9: Statusdiagramm

Gleiche oder funktionsgleiche Elemente werden durch gleiche Bezugszeichen in den Figuren indiziert, soweit nicht anders angegeben. Vertikal bezeichnet in dem Kontext dieser Beschreibung eine Richtung parallel zu der Schwerkraft; horizontal bezeichnet eine zu der Schwerkraft senkrechte Richtung oder Ebene.

### AUSFÜHRUNGSFORMEN DER ERFINDUNG

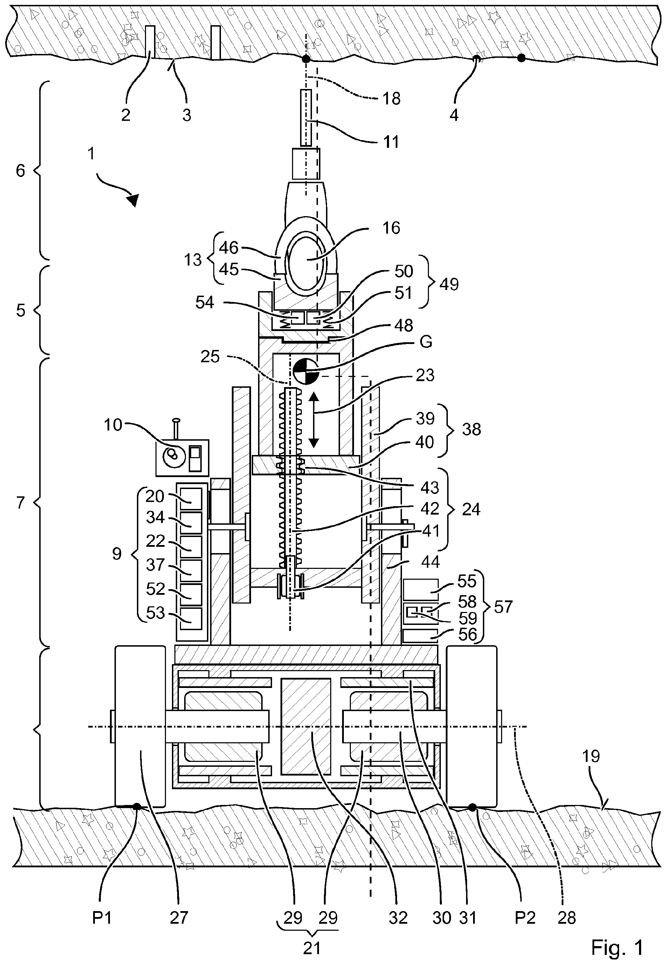

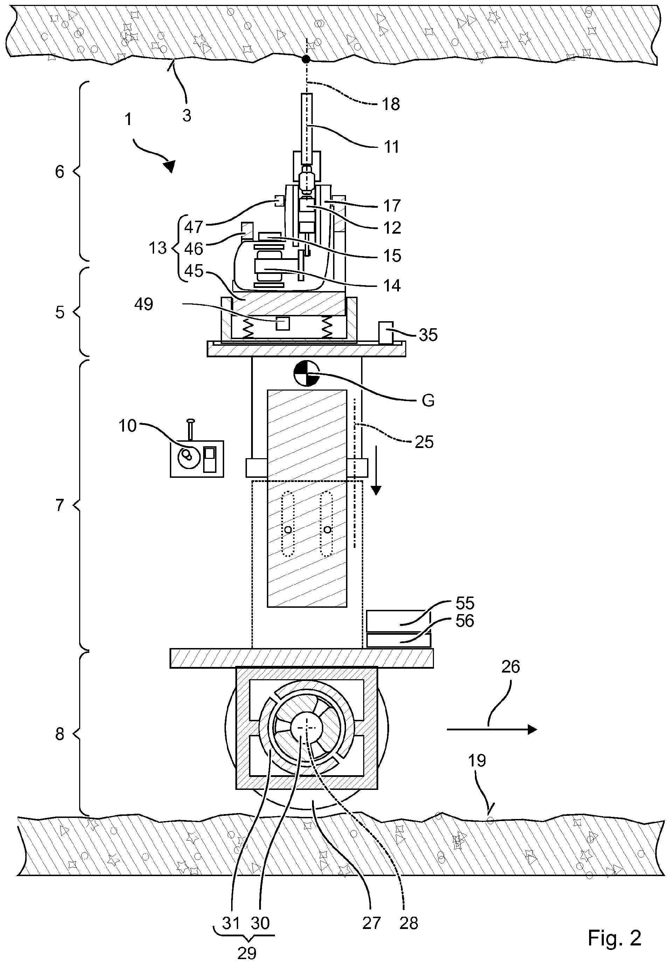

Fig. 1 und Fig. 2 zeigen eine beispielhafte selbstausrichtende Werkzeugführung **1** für Installationsarbeiten in einem Rohbau. Eine Montage eines Lüftungsrohrs benötigt zum Beispiel mehrere Löcher **2** in einer Decke **3** des Rohbaus. Die Löcher **2** sollen an vorgegebenen Positionen **4** liegen, z.B. in einer Flucht. Ferner sollen die Löcher **2** zueinander parallel sein, z.B. vertikal orientiert. Die Position **4** ist beispielsweise in einem Plan verzeichnet. Ein Vorarbeiter kann die Position **4** durch Farbmarkierungen an der Decke **3** des Rohbaus anzeichnen. Andere Installationsarbeiten an der Decke **3** können das Setzen von Nägeln, Eintreiben von Schrauben, Abschleifen etc. umfassen.

Fig. 1 und Fig. 2 zeigen schematisch eine Ausführungsform der selbstausrichtenden Werkzeugführung **1.** Die Werkzeugführung **1** hat eine Halterung **5** für eine Handwerkzeugmaschine **6**, ein motorisiertes Hebewerk **7**, ein motorisiertes Fahrwerk **8**, eine Steuerung **9** und eine Konsole **10**.

Der Anwender kann der Anwendung entsprechend die Werkzeugführung **1** mit einer geeigneten Handwerkzeugmaschine **6** und einem geeigneten Werkzeug **11** rüsten. Zum Bohren von Löchern **2** in einen Rohbau wäre dies beispielsweise ein Bohrhammer mit einem Schlagwerk **12** und ein Bohrer mit einer gesinterten Hartmetallspitze. Die Handwerkzeugmaschine **6** ist in die Halterung **5** auf dem Hebewerk **7** einsetzbar. Eine Verriegelung **13** sichert die Handwerkzeugmaschine **6** in der Halterung **5**. Die Verriegelung **13** ist vorzugsweise ohne Werkzeug lösbar. In anderen Ausführungen kann die Handwerkzeugmaschine mit der Halterung **5** dauerhaft verbunden sein, z.B. verschraubt sein.

Der Bohrhammer ist nur ein Beispiel für eine Handwerkzeugmaschine **6.** Andere Beispiele sind ein Elektroschrauber, ein Nagelsetzgerät, ein Winkelschleifer, eine Klebepistole, eine Lackierpistole, etc.. Ein Typ der Handwerkzeugmaschinen **6** treibt ein austauschbares Werkzeug **11**, z.B. den Bohrer, einen Meißel, ein Schrauberbit, eine Trennscheibe, etc. für seine Funktion an. Ein anderer Typ von Handwerkzeugmaschinen **6** verarbeitet direkt ein Verbrauchsmaterial, z.B. Nägel, Schrauben, Farbe, Kleber. Die Handwerkzeugmaschinen **6** zeichnen sich durch einen eigenen Antrieb aus, mit dem das Werkzeug **11** angetrieben bzw. das Verbrauchsmaterial eingetrieben oder aufgebracht wird. Der Anwender muss keine manuelle Kraft für die Nutzung der Handwerkzeugmaschine **6** aufbringen. Die Handwerkzeugmaschinen werden auf als kraftgetriebene Werkzeuge (power tool) bezeichnet. Die Kraftquelle **14** kann elektrisch, brennstoff-getrieben sein. Beispiele sind ein Elektromotor, eine Elektropumpe, eine gas-gespeiste Verbrennungskammer, ein pulvergetriebener Kolben, etc.. Die Kraftquelle **14** ist mit einem (Auslöse-) Taster **15** gekoppelt. Bei gedrückten Auslösetaster **15** wird die Kraftquelle **14** aktiviert. Der Auslösetaster **15** ist vorzugsweise fernauslösbar oder arretierbar.

Die Handwerkzeugmaschine **6** kann eine handelsübliche, handgehaltene Handwerkzeugmaschine **6** sein. Die handgehaltene Handwerkzeugmaschine **6** hat einen Handgriff **16** und typischerweise einen Gehäuseabschnitt **17** zum Befestigen eines Zusatzgriffs. Die Handwerkzeugmaschine **6** kann ohne Handgriff ausgebildet sein. Die Halterung **5** kann auch für nicht-handgehaltene Handwerkzeugmaschinen ausgelegt sein.

Die Handwerkzeugmaschine **6** haben eine durch ihren Aufbau definierte Arbeitsachse **18**. Eine Spitze des Werkzeugs **11** bzw. eine Spitze des Verbrauchsmaterials liegt auf der Arbeitsachse **18**. Die Spitze wird entlang der Arbeitsachse **18** bewegt. Die Spitze berührt als erstes den zu bearbeitenden Untergrund, z.B. die Decke **3**.

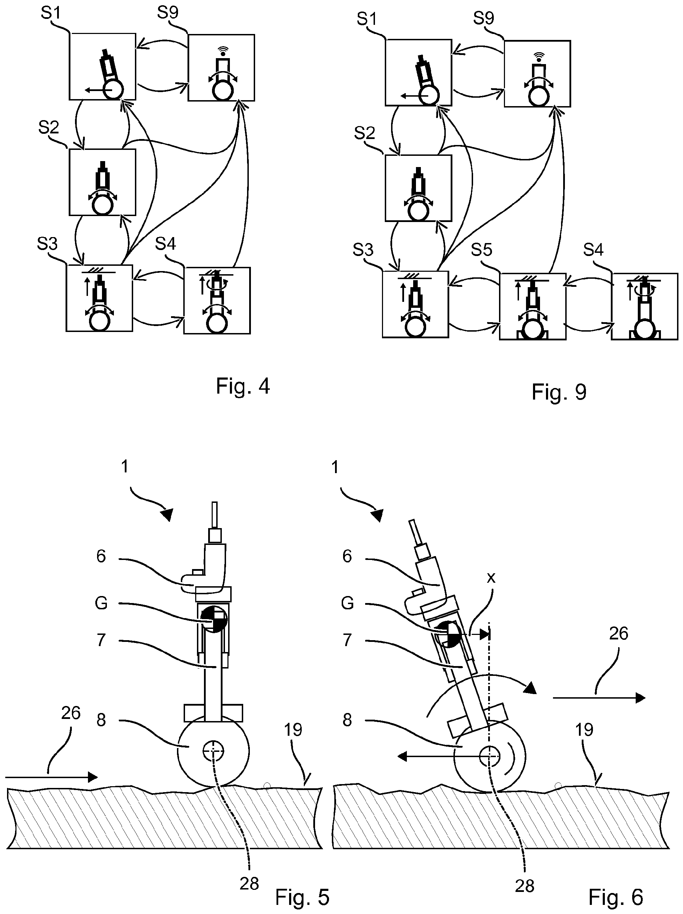

Ein Statusdiagram der Werkzeugführung **1** ist in Fig. 4 gezeigt. Der Anwender aktiviert die Werkzeugführung **1** mittels der Konsole **10**. Die Fahrwerk **8** ist in einem (Fahr-) Modus **S1**, in welchem der Anwender die Werkzeugführung **1** auf dem Boden **19** durch den Raum bewegen kann. Die Steuerung **9** aktiviert eine Lenkung **20** der Werkzeugführung **1**. Der Anwender kann Fahrtrichtung und Geschwindigkeit über die Konsole **10** vorgeben. Der Anwender lenkt die Werkzeugführung **1** zu einer der markierten Positionen **4**. Das Fahrwerk **8** hat einen Antrieb **21**, welcher das Fahrwerk **8** aus eigener Kraft über den Boden **19** bewegt. Richtung und Geschwindigkeit der Bewegung des Fahrwerks **8** werden durch die Lenkung **20** der Werkzeugführung **1** gesteuert. Die Lenkung **20** verarbeitet dazu unter Anderem die über die Konsole **10** eingegebenen Vorgaben zu Geschwindigkeit und Fahrtrichtung.

An der markierten Position **4** hält der Anwender die Werkzeugführung **1** an. Über die Konsole **10** versetzt der Anwender das Fahrwerk **8** in einen (Stand-) Modus **S2**. Die Steuerung **9** sperrt die Lenkung **20** für den Anwender gesperrt oder schaltet die Lenkung **20** inaktiv. Die Lenkung **20** ignoriert über die Konsole **10** eingegebene Vorgaben zu Geschwindigkeit und Fahrrichtung. Die Werkzeugführung **1** verharrt in der momentan eingenommenen Position **4.** Die Lenkung **20** kann die momentane Position **4** erfassen. Falls das Fahrwerk **8** die momentane Position **4** verlässt oder aus dieser verschoben wird, erzeugt die Lenkung **20** automatisch Steuersignale, um das Fahrwerk **8** in die erfasste Position 4 zurückzufahren.

Der Anwender kann über die Konsole **10** einen (Hub-) Modus **S3** aktivieren, um die Handwerkzeugmaschine **6** mit dem Hebewerk **7** anzuheben. Die Steuerung **9** erzwingt den Standmodus **S2** für das Fahrwerk **8** bevor der Hubmodus aktivierbar ist. Die Steuerung **9** kann die Aktivierung des Hubmodus solange verzögern, bis das Fahrwerk **8** steht. In dem Hubmodus ist ein Leitstand **22** für den Anwender freigeschaltet oder aktiviert. Der Anwender kann über die Konsole **10** Bewegungsrichtung **23**, d.h. auf oder ab, Hubgeschwindigkeit und Stellung des Hebewerks **7** vorgeben. Die Halterung **5** wird durch das Hebewerk **7** entsprechend bewegt. Der Leitstand **22** steuert einen Vortrieb **24** des Hebewerks **7** unter Berücksichtigung der über die Konsole **10** vorgegebenen vertikalen Bewegungsrichtung und Hubgeschwindigkeit an. Das Hebewerk **7** hebt oder senkt die Halterung **5** und ggf. die in diese eingesetzte Handwerkzeugmaschine **6** entlang einer festen Hubachse **25**. Das Hebewerk **7** ist auf eine einachsige, translatorische Bewegung auf der Hubachse **25** beschränkt.

Die Arbeitsachse **18** der Handwerkzeugmaschine **6** ist parallel zu der Hubachse **25**. In einer Ausgestaltung erzwingt die Konstruktion der Halterung **5** die parallele Ausrichtung. Die Handwerkzeugmaschine **6** ist beispielsweise aufgrund einer Passform der Halterung **5** zu einem Gehäuse der Handwerkzeugmaschine **6** in nur einer definierten Weise in der Halterung **5** einsetzbar. In einer Ausgestaltung ist die Halterung **5** um eine zur Hubachse **25** geneigte (Schwenk-) Achse schwenkbar, um die Ausrichtung der Arbeitsachse **18** an der Hubachse **25** auszurichten.

Ein Ausrichten der Hubachse **25** und damit der Arbeitsachse **18** gegenüber der Decke **3** erfolgt dynamisch durch das Fahrwerk **8**. Das Fahrwerk **8** richtet die Hubachse **25** vertikal aus, d.h. parallel zu der Schwerkraft.

Die Handwerkzeugmaschine **6** lässt sich vorzugsweise über den Leitstand **22** einschalten. Das Werkzeug **11** kann die Decke **3** bearbeiten, z.B. ein Loch **2** bohren. Die Steuerung **9** kann einen (Bearbeitungs-) Modus **S4** aufweisen, welcher den Vortrieb **24** des Hebewerks **7** während der Bearbeitung der Decke **3** automatisch steuert. Der Bearbeitungsmodus kann beispielsweise an der Konsole **10** manuell aktiviert werden. Der Leitstand **22** passt in dem Bearbeitungsmodus die Hubgeschwindigkeit des Hebewerks **7** an einen Bearbeitungsfortschritt des Werkzeugs **11** an. Das Hebewerk **7** und das Werkzeug **11** können vor übermäßigen Belastungen geschützt werden. Dem Leitstand **22** kann ein Bearbeitungsziel, z.B. eine Bohrlochtiefe, vorgegeben sein. Nach Erreichen des Bearbeitungsziels kann der Leitstand **22** automatisch den Vortrieb **24** stoppen. Zudem kann der Leitstand **22** das Hebewerk **7** automatisch soweit absenken, dass das Werkzeug **11** außer Eingriff mit der Decke **3** ist.

Der Anwender kann die Werkzeugführung **1** nun zu einer nächsten markierten Position **4** lenken. Der Anwender schaltet die Werkzeugführung **1** in den Fahrmodus **S1** um. Der Leitstand **22** wird für den Anwender gesperrt. Die Handwerkzeugmaschine **6** wird zwangsweise abgeschaltet. Die Werkzeugführung **1** kann vor dem Anfahren prüfen, ob das Werkzeug **11** noch im Eingriff mit der Decke **3** steht. Beispielsweise verfährt die Lenkung **20** das Fahrwerk **8** um eine kleine vorgegebene Distanz in eine Richtung **26** und prüft, ob ein entgegenwirkendes Drehmoment auf das Fahrwerk **8** einwirkt. Die Lenkung **20** fährt das Fahrwerk **8** an die vorhergehende Position **4** zurück, wechselt in den Standmodus und veranlasst den Leitstand **22** das Hebewerk **7** abzusenken.

Das Fahrwerk **8** hat zwei mit dem Antrieb **21** gekoppelte Räder **27**. Die beiden Räder **27** sind zueinander versetzt auf einer Querachse oder Radachse **28** angeordnet. Die Radachse **28** verläuft durch die Mitte der beiden Räder **27**. Die Räder **27** können zueinander parallel sein; oder die Räder **27** sind aufgrund eines Radsturzes und/oder eines Spurwinkels um wenige Grad zueinander geneigt. Die beiden Räder **27** drehen sich im Wesentlichen um die Radachse **28**. Jedes der Räder **27** ist mit dem Antrieb **21** gekoppelt. Der Antrieb **21** kann beispielsweise zwei Elektromotoren **29** beinhalten. Die Räder **27** sitzen jeweils unmittelbar auf einem Rotor **30** eines der Elektromotoren **29**. Alternativ können die Räder **27** über Kupplungen und Getriebe an einen zentralen Elektromotor **29** gekoppelt sein. Der Antrieb **21** übt auf die Räder **27** ein um die Radachse **28** wirkendes Drehmoment aus. Die drehend angetriebenen Räder **27** bewegen das Fahrwerk **8** über den Boden **19**. Das Fahrwerk **8** bewegt sich geradeaus, wenn die beiden Räder **27** sich gleich schnell drehen. Die Räder **27** können von dem Antrieb **21** individuell angetrieben werden. Unterschiedliches Drehmoment und unterschiedliche Drehzahl der Räder **27** lassen das Fahrwerk um eine Kurve fahren. Vorzugsweise können die Räder **27** gegenläufig angetrieben werden, um das Fahrwerk **8** um seine Hochachse zu drehen. Der Antrieb **21** empfängt von der Lenkung **20** Steuersignale für Drehzahl und Drehmoment der beiden Räder **27**. Die Lenkung **20** erzeugt die Steuersignale ansprechend auf vorgegebene Lenkbewegungen, z.B. durch den Anwender vorgegebene Lenkbewegungen. Der Antrieb **21** kann eine Sensorik zum Erfassen des abgegebenen Drehmoments und Drehzahl der Räder **27** aufweisen. Die erfassten Messdaten können der Lenkung **20** übermittelt werden, um die Abweichungen von der Lenkbewegung auszuregeln.

Das Fahrwerk **8** und die Werkzeugführung **1** stehen nur mit den zwei Rädern **27** auf dem Boden **19.** Die beiden Berührpunkte **P1, P2** liegen auf einer zur Radachse **28** parallelen Linie. Für einen statisch stabilen Stand fehlt ein dritter Berührpunkt mit dem Boden **19** außerhalb der Linie. Die Werkzeugführung **1** würde ohne Gegenmaßnahme umfallen. Die Lenkung **20** erreicht ein dynamisches Gleichgewicht durch permanentes Ausbalancieren des Schwerpunkts **G** des Hebewerks **7**. Basierend auf einer Erfassung des Schwerpunkts **G** steuert die Lenkung **20** den Antrieb **21** an ein dem Fallen entgegenwirkendes Drehmoment zu erzeugen.

Das Hebewerk **7** ist auf dem Fahrwerk **8** montiert. Das Hebewerk **7** ist gegenüber dem Fahrwerk **8** unbeweglich, insbesondere ist das Hebewerk **7** gegenüber dem Antrieb **21** und der Radachse **28** unbeweglich. Das Hebewerk **7** ist vorzugsweise starr mit einem Stator **31** des Antriebs **21** verbunden. Der Antrieb **21** erzeugt prinzipiell paarweise ein Drehmoment und ein rückwirkendes Drehmoment, gleicher Größe und entgegengesetzter Drehrichtung. Das Drehmoment wirkt über den Rotor **30** des Antriebs **21** auf die Räder **27** ein. Das rückwirkende Drehmoment wirkt über den Stator **31** des Antriebs **21** auf das Hebewerk **7** ein.

Das Gewicht der Werkzeugführung **1** setzt sich aus dem Gewicht des Fahrwerks **8** und dem Gewicht des Hebewerks **7** zusammen. Das Gewicht der Handwerkzeugmaschine **6** wird vereinfachend dem Gewicht der Hebewerk **7** zugeschlagen. Der Schwerpunkt des Fahrwerks **8** liegt näherungsweise auf der Radachse **28.** Die Räder **27**, der Antrieb **21** und Batterien **32** sind symmetrisch um die Radachse **28** angeordnet. Der Schwerpunkt **G** des Hebewerks **7** liegt oberhalb der Radachse **28**. Die Werkzeugführung **1** steht, wenngleich nur metastabil, wenn der Schwerpunkt **G** vertikal über der Radachse **28** ist (Gleichgewicht, Fig. 5). Eine laterale Auslenkung **x** ist gleich Null. Die Werkzeugführung **1** fällt, wenn der Schwerpunkt **G** in lateraler Richtung **33** gegenüber der Radachse **28** versetzt ist, d.h. die laterale Auslenkung **x** ungleich Null ist (Fig. 6).

Die Lenkung **20** hat einen (Schwerpunkt-) Sensor **34** zum Erfassen der lateralen Auslenkung **x** des Schwerpunkts **G** des Hebewerks **7**. Die laterale Auslenkung **x** des Schwerpunkts **G** außerhalb des Gleichgewichts resultiert in verschiedenen messbaren Größen. Das Hebewerk **7** ist gegenüber der Schwerkraft geneigt; der Schwerpunktsensor **34** kann entsprechend einen Neigungssensor beinhalten. Die Fallbewegung führt zu einer charakteristischen Beschleunigung; der Schwerpunktsensor **34** kann einen Gyrosensor, einen Beschleunigungssensor, einen Drehratensensor, etc. zum Bestimmen von Geschwindigkeit, Beschleunigung, Drehrate und/oder Drehbewegung um die Radachse **28** beinhalten. Das geneigte Hebewerk **7** übt ein Drehmoment auf den Antrieb **21** aus; der Schwerpunktsensor **34** kann einen Drehmomentsensor, einen Kraftsensor, etc. zum Erfassen eines Drehmoments, einer nicht-vertikalen Kraft, etc. beinhalten. Die Sensoren können basierend auf mechanischen, optischen, magnetischen oder elektrischen Effekten die oben aufgeführten Größen erfassen.

Die Lenkung **20** beinhaltet einen Steuerungsablauf, der basierend auf der Auslenkung **x** ein Drehmoment zum Aufrichten des Hebewerks **7** bestimmt. Beispielsweise kann die Lenkung **20** ein zu der Auslenkung **x** proportionales Drehmoment vorgeben. Die Lenkung **20** übermittelt das Drehmoment in Form eines Steuersignals an den Antrieb **21**, welcher das Drehmoment erzeugt. Der Steuerungsablauf kann eine Regelungsschleife beinhalten, die die Auslenkung **x** auf Null ausregelt. Regelungsparameter wie der Verstärkungsfaktor und der Integralanteil sind vorzugsweise anpassbar, z.B. um den Steuerungsablauf an das unterschiedliche Gewicht der Handwerkzeugmaschinen **6** anzupassen.

Das Hebewerk **7** wird durch die Motorkraft des Antriebs **21** vertikal ausgerichtet. Das Hebewerk **7** kann ausgelöst durch Störungen des Gleichgewichts und in Reaktion auf den Steuerungsablauf mehrfach um die vertikale Ausrichtung pendeln. Nach dem Ausschwingen ist für den Anwender keine Bewegung mehr erkennbar. Dem auf das Hebewerk **7** wirkenden Drehmoment steht das auf die Räder **27** wirkende Drehmoment gegenüber. Die Räder **27** drehen sich entsprechend, wodurch das Fahrwerk **8** in die Richtung **26** der Auslenkung **x** fährt (Fig. 6). Das Fahrwerk **8** pendelt analog dem Hebewerk **7** um eine mittlere Position. Reibung und Haftung der Räder **27** am Boden **19** dämpfen das Pendeln.

Der statisch instabile Stand des Fahrwerks **8** und das Ausbalancieren werden genutzt, um die Hubachse **25** vertikal auszurichten. In dem dynamischen Gleichgewicht liegt der Schwerpunkt **G** vertikal über der Radachse **28**. Das Hebewerk **7** ist bezogen auf die Radachse **28** derart angeordnet, dass eine Linie, die durch den Schwerpunkt **G** und die Radachse **28** verläuft, parallel zu der Hubachse **25** ist. Das beispielhafte Hebewerk **7** hat ein Ausgleichsgewicht **35** an der Halterung **5**, um die Position **4** des Schwerpunkts **G** für unterschiedliche Handwerkzeugmaschinen **6** anzupassen. Das Ausgleichsgewicht **35** ist in unterschiedlichen Abständen zu der Hubachse **25** arretierbar. Anstelle eines Ausgleichsgewichts **35** kann die Regelung die Auslenkung **x** auf einen vorgegebenen Offset ausregeln. Der Offset berücksichtigt vorzugsweise die Stellposition des Hebewerks **7**. Unabhängig von der Höhe des Hebewerks **7** richtet das dynamische Balancieren die Hubachse **25** vertikal aus.

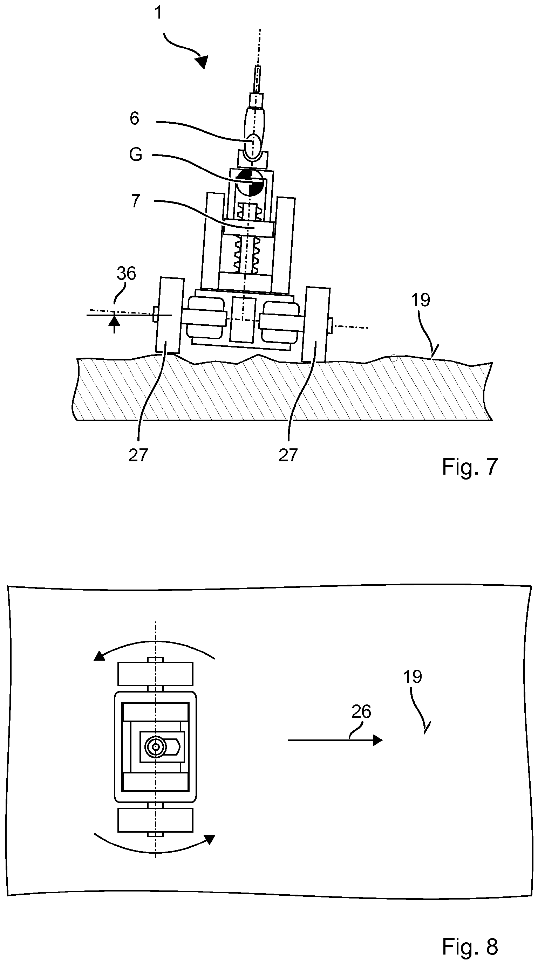

Das dynamische Balancieren sorgt für eine vertikale Ausrichtung, wenn die Radachse **28** horizontal liegt. Die Auslenkung **x** liegt in einer zu der Radachse **28** senkrechten Ebene. Bei einem unebenen Boden **19** oder einem geneigten Boden **19** kann die Radachse **28** zur der horizontalen Ebene geneigt sein (Fig. 7). Die Neigung **36** der Radachse **28** überträgt sich in eine ebensolche Neigung des Hebewerks **7**. Die Neigung **36** liegt in einer Ebene, welche durch die Radachse **28** und die vertikale Achse aufgespannt ist. Die Neigung der Radachse **28** lässt sich durch das dynamische Balancieren nicht unmittelbar ausgleichen.

Für das Bearbeiten der Decke **3** wird vorzugsweise auch die Neigung **36** kompensiert. Die beispielhafte Steuerung **9** sieht vor, die Neigung **36** beim Aktivieren des Hubmodus **S3** auszulösen. Der Anwender oder eine externe Steuerung **9** werden den Hubmodus **S3** aktivieren, wenn die Werkzeugführung **1** an der vorgegebenen Position **4** positioniert ist. Die Kompensation kann auch in einem anderen Modus ausgelöst werden. Beispielsweise kann ein spezifischer Modus für die Kompensation vorgesehen sein, welcher beispielsweise bei Erreichen der Position **4** automatisch oder auf Anfrage des Anwenders ausgelöst wird.

Das Ausrichten sieht daher zunächst vor, die beiden Räder **27** auf gleiche Höhe zu stellen. Die Werkzeugführung **1** dreht sich um eine Hochachse, welche beispielsweise mit der Arbeitsachse **18** zusammenfällt. Die Hochachse bezeichnet eine Achse, die senkrecht zur Radachse **28** ist und im Wesentlich längs der vertikalen Achse verläuft. Die Werkzeugführung **1** ist vorzugsweise so positioniert, dass die Hochachse durch die vorgegebene Position **4** verläuft. Die Lenkung **20** dreht die beiden Räder **27** mit gleicher Drehzahl in gegenläufige Richtung **26.** Die Werkzeugführung **1** und das Werkzeug **11** bleiben somit an der gleichen Position **4.** Der kompakte Aufbau mit der geringen Standfläche erlaubt typischerweise diese Drehung auch in engen Räumen. Das Drehen erfolgt, bis die Neigung **36** der Radachse **28** gleich Null ist. Da die Werkzeugführung **1** mit nur zwei Rädern **27** den Boden **19** berührt, gibt es zu jeder Position **4** wenigstens eine Stellung in der alle Räder **27** auf der gleichen Höhe stehen. Ein Neigungssensor **37** kann die Neigung der der Radachse **28** gegenüber der horizontalen Ebene erfassen. Der Neigungssensor **37** kann beispielsweise durch den Schwerpunktsensor **34** oder analog implementiert sein. Die Lenkung **20** balanciert das Hebewerk **7** in der zur Radachse **28** senkrechten lateralen Richtung **26** aus. Das Drehmoment auf die beiden Räder **27** wirkt in die gleiche Richtung **26** und ist typischerweise gleich groß.

Die Lenkung **20** beinhaltet beispielsweise eine Konsole **10** mit Eingabeelementen für Fahrrichtung und Geschwindigkeit. Eine beispielhafte Konsole **10** basiert auf einem zweiachsigen Joystick. Andere Konsolen können beispielsweise ein Lenkrad für die Fahrrichtung und einen Schieber für die Geschwindigkeit aufweisen. Die Konsole **10** ist vorzugsweise von der Werkzeugführung **1** abnehmbar. Eine Übermittlung der von der Konsole **10** erzeugten Steuersignale zu dem Antrieb **21** erfolgt funkbasiert, optisch oder leitungsbasiert. Die Lenkung **20** kann eine von dem Anwender auf das Fahrwerk **8** ausgeübte Schub- oder Zugkraft erfassen. Unter der Einwirkung der Kraft kippt das Fahrwerk **8** in Richtung **26** der Schub- oder Zugkraft. Die Lenkung **20** erfasst die Auslenkung **x** des Fahrwerks **8**. Eine Geschwindigkeit des Fahrwerks **8** kann beispielsweise proportional der Auslenkung **x** sein.

Das beispielhafte Hebewerk **7** basiert auf einer linearen Schienenführung **38**. Zwei parallele Profilschienen **39** sind auf dem Fahrwerk **8** befestigt. Die beiden Profilschienen **39** definieren die Hubachse **25**. Ein Läufer **40** greift in die beiden Profilschienen 39 ein. Der Läufer **40** ist auf den Profilschienen **39** entlang der Hubachse **25** verschiebbar. Ein Elektromotor **41** und eine Spindel **42** bilden den Vortrieb **24** für den Läufer **40**. Die Spindel **42** ist zwischen den beiden Profilschienen **39** drehbar gelagert. Der Läufer **40** hat ein in die Spindel **42** eingreifendes Gewinde **43**. Der Elektromotor **41** dreht die Spindel **42** um ihre Längsachse; das Gewinde **43** setzt die Drehbewegung in eine Bewegung längs der Hubachse **25** um. Das dargestellte Hebewerk **7** ist ein Beispiel für ein teleskopierendes Hebewerk. Anstelle von oder zusätzlich zu Profilschienen und Läufer **40** können in gleicher Weise ineinander gesetzte Rohre verwendet werden. Ein anderer Vortrieb **24** basiert auf einer Zahnstange und einem durch den Motor angetriebenes Ritzel. Alternativ kann auch eine hydraulische oder pneumatische Presse das Hebewerk **7** anheben.

Das beispielhafte Hebewerk **7** kann neben dem kraftgetriebenen Hebewerk **7** eine manuell telekopierbare Plattform **44** beinhalten. Die Plattform **44** kann vergleichsweise kompakt aufgebaut werden. Der kraftgetriebene Abschnitt kann mittels der Plattform auf eine Grundhöhe gebracht werden. Die Plattform **44** kann ein- oder mehrstufig sein. Die beispielhafte Plattform **44** basiert auf einer Schienenführung.

Eine beispielhafte Halterung **5** hat eine wannenförmige Schale **45** mit einem Spannband **46**. Der Handgriff **16** kann in der Schale **45** positioniert und mit dem Spannband **46** in der Schale **45** fixiert werden. Mit einem zweiten Spannband **47** kann das Gehäuse der Handwerkzeugmaschine **6** an der Halterung **5** angezurrt werden. Die Halterung **5** ist vorzugsweise senkrecht zu der Hubachse **25** verschiebbar. Die Halterung **5** kann beispielsweise auf einer Schwalbenschwanzführung **48** verschiebbar sein. Der Anwender kann die Arbeitsachse **18** vertikal zu der Radachse **28** positionieren. Die Halterung **5** kann eine Winkeleinstellung beinhalten, die ein präzises Ausrichten der Arbeitsachse **18** parallel zu der Hubachse **25** ermöglicht. Die Winkeleinstellung beinhaltet beispielsweise ein Gelenk und eine Stellschraube.

Das Hebewerk **7** ist vorzugsweise mit einem Sensor **49** zum Bestimmen der Anpresskraft an der Decke **3** ausgestattet. Beispielsweise ist die Halterung **5** in vertikaler Richtung **26** auf einer Feder **50** abgestützt. Die Anpresskraft drückt die Feder **50** zusammen. Ein Wegsensor **51**, z.B. eine Schiebepotentiometer. bestimmt die Wegstrecke, um welche die Feder **50** zusammendrückt ist. Mit bekannter Federkonstante ermittelt der Sensor **49** die Anpresskraft. Andere Sensoren zum Bestimmen der Anpresskraft können auf piezoelektrischen Effekten, Dehnungsstreifen, etc. basieren. Andere Ausgestaltungen bestimmen indirekt die Anpresskraft. Beispielsweise beinhaltet der Sensor **49** eine Auswertung der Leistungsaufnahme, z.B. der Stromaufnahme, des Vortriebs **24**. Eine Korrelation der Leistungsaufnahme und einem Maß für die Anpresskraft sind in einer Tabelle in dem Sensor hinterlegt. Das erstmalige Anpressen des Werkzeugs **11** an die Decke **3** erfasst der Sensor **49** als einen Sprung in der Anpresskraft. Der Sensor **49** meldet dem Leitstand **22** in einem Steuersignal, dass das Werkzeug **11** an der Decke **3** anliegt. Der Leitstand **22** kann ansprechend eine manuelle Steuerung des Hebewerks **7** stoppen und in den Bearbeitungsmodus wechseln. In einer bevorzugten Variante ist in dem Leitstand **22** ein Sollwert für die Anpresskraft hinterlegt. Der Sollwert kann zuvor von dem Anwender eingegeben oder ausgewählt werden. Der Sollwert ist von dem Werkzeug **11**, z.B. einem Durchmesser des Bohrers, abhängig. Der Vortrieb **24** wird auf eine gleichbleibende Anpresskraft ausgeregelt. Der Sensor **49** kann als Teil einer Schutzschaltung **52** einen Messwert für die Anpresskraft bereitstellen. Die Schutzschaltung stoppt **52** ein Anheben des Hebewerks **7,** wenn der Messwert einen Schwellwert überschreitet.

In einer Ausgestaltung kann die Werkzeugführung **1** das dynamische Balancieren aussetzen, wenn das Werkzeug **11** die Decke **3** berührt. Mit dem Berührpunkt an der Decke **3** kann die Werkzeugführung **1** statisch stehen. Die Werkzeugführung **1** kann in einen Stoppmodus **S5** wechseln, in welchem die Räder **27** durch eine Bremse **53** blockiert sind (Fig. 9). Das Balancieren und die damit einhergehende leichte Pendelbewegung stoppt.

Die Werkzeugführung **1** hat einen (Kontakt-) Sensor **54**, welcher einen Kontakt mit der Decke **3** erfasst. Typischerweise berührt das Werkzeug **11**, Verbrauchsmaterial oder die Handwerkzeugmaschine **6** die Decke **3**. Die Halterung **5** berührt mittelbar die Decke **3**. Der Kontaktsensor **54** gibt ein (Kontakt-) Signal an die Steuerung **9** aus, in welchem kodiert ist, ob das Werkzeug **11** in Kontakt mit der Decke **3** ist. Der Kontaktsensor **54** kann beispielsweise die Anpresskraft des Hebewerks **7** oder ein Maß für die Anpresskraft auswerten. Der Kontaktsensor **54** meldet einen Kontakt, wenn die Anpresskraft einen Schwellwert überschreitet oder eine Änderungsrate der Anpresskraft einen Schwellwert überschreitet. Der Schwellwert ist vorzugsweise derart bemessen, dass die zugehörige Anpresskraft ausreichend ist, dass die Werkzeugführung **1** über die beiden Räder **27** und den Kontaktpunkt an der Decke **3** in einem statischen stabilen Stand zu halten. Der Kontaktsensor **54** kann beispielsweise durch den Sensor **49** oder einen analogen Sensor **49** realisiert werden.

Die Steuerung **9** setzt bei Anliegen des Kontaktsignals vorzugsweise das Balancieren des Fahrwerks **8** aus. Die Steuerung **9** kann das Aussetzen verzögern, bis das Kontaktsignal für eine Mindestdauer anliegt. Bei Anliegen des Kontaktsignals prüft die Lenkung **20,** ob das Hebewerk **7** vertikal ausgerichtet ist. Erfasst die Lenkung **20** eine Abweichung von der vertikalen Ausrichtung, senkt darauf ansprechend der Leitstand **22** das Hebewerk 7 ab. Das Absenken kann um einen vorgegebenen Hub, z.B. 1 cm, erfolgen. Alternativ kann der Hub basierend auf der Abweichung von der vertikalen Ausrichtung und/oder der Höhe des Hebewerks **7** bestimmt werden. Beispielsweise ist der Hub proportional zu dem Produkt der Abweichung in einem Winkelmaß und der aktuellen Höhe des Hebewerks **7**. Das Werkzeug **11** löst sich von der Decke **3**. In Folge meldet der Kontaktsensor **54** keinen Kontakt mehr mit der Decke **3**. Die Steuerung **9** aktiviert sofort wieder das Balancieren mittels der Lenkung **20.** Die Lenkung **20** richtet das Hebewerk **7** senkrecht aus. Die Steuerung **9** kann das in dem Absatz beschriebene Verfahren iterativ wiederholen, bis das Hebewerk **7** senkrecht ausgerichtet ist. Anschließend hebt die Steuerung **9** das Hebewerk **7** wenigstens vorzugsweise soweit an, bis ein Kontaktsignal anliegt. Die Werkzeugführung **1** steht nun vertikal ausrichtet.

Das Fahrwerk **8** hat vorzugsweise eine Bremse **53.** Die Bremse **53** wird vorzugsweise aktiviert, sobald die Werkzeugführung **1** vertikal ausgerichtet ist und das Kontaktsignal anliegt. Die Bremse **53** ist eine Feststellbremse, welche die Räder **27** des Fahrwerks **8** dauerhaft blockiert. Die Bremse **53** ist beispielsweise als Motorbremse realisiert. Die Bremse **53** erzeugt eine elektromagnetische Kraft, die einer Bewegung der Räder **27** entgegenwirkt. Die Bremse **53** kann passiv sein. Die Elektromotoren **29** können gemäß einem generatorischen Prinzip einen elektrischen Strom in dem Stator **31** erzeugen, wenn deren Rotor **30** gedreht wird. Beispiele für die Elektromotoren **29** mit dem generatorischen Prinzip sind Gleichstrommotoren, Universalmotoren, etc.. Der generatorisch erzeugte Strom wird durch die Bremse **53** über einen Lastwiderstand kurzgeschlossen. Das rückwirkende Magnetfeld wirkt der Drehbewegung des Rotors **30** entgegen. Alternativ kann ein Drehzahlsensor oder Bewegungssensor eine Bewegung erfassen. Die Lenkung **20** ermittelt ein entsprechendes Steuerungssignal, um den Vortrieb **24** der Bewegung gegenzulenken. Die Bremse **53** kann auch durch eine mechanische Bremse in dem Fahrwerk **8** realisiert sein, z.B. eine Scheibenbremse, Trommelbremse. Die mechanische Bremse **53** kann die Motorbremse unterstützen.

Die Werkzeugführung **1** hat ein oder mehrere Batterien **32**, **55**. Die Batterien **55** versorgen die Lenkung **20**, den Leitstand **22**, die Elektromotoren **29** des Antriebs **21**, den Elektromotor **41** des Vortriebs und ggf. die Handwerkzeugmaschine **6** mit Strom. Die Batterien **55** können eine stationäre Batterie **32** und ein oder mehrere abnehmbare Batterien **55** umfassen. Die stationäre Batterie **32** ist vorzugsweise in dem Fahrwerk **8** integriert. Die Werkzeugführung **1** hat entsprechende elektromechanische Schnittstellen für die abnehmbaren Batterien **55**. Die Schnittstellen entsprechen beispielsweise den Schnittstellen von Handwerkzeugmaschinen **6**. Der Anwender kann entladene Batterien **55** durch geladene Batterien **55** austauschen und die die entladenen Batterien **55** in einer separaten Ladestation laden. Die Leistungsaufnahme der Handwerkzeugmaschine **6** ist typischerweise deutlich über 200 Watt. Eine entsprechend große Kapazität muss durch die Batterien bereitgestellt werden. Die stationäre Batterie **32** ist mit den anderen Batterien **55** elektrisch verschaltet. Eine Ladereglung **56** lädt die stationäre Batterie **32** mit den anderen Batterien **55** auf. Die Laderegelung **56** hält vorzugsweise einen Ladestand der stationären Batterie **32** oberhalb eines Notwerts. Der Anwender kann die anderen Batterien **55** ohne Gefahr abnehmen. Die stationäre Batterie **32** hat aufgrund des Notwerts einen ausreichenden Ladestand, um das Fahrwerk **8** für wenigstens 10 Minuten, vorzugsweise wenigstens eine halbe Stunde auszubalancieren.

Die Werkzeugführung **1** fällt in einen (Not-) Modus **S9,** wenn der Ladestand der Batterien 32, **55** unter den Notwert fällt. Der Notmodus gewährleistet einen sicheren Stand der Werkzeugführung **1**. Das Fahrwerk **8** und die Lenkung **20** sind mit Strom versorgt. Der Anwender kann die Werkzeugführung **1** zu einer Ladestation oder einem anderen gewünschten Standort fahren. Andere Verbraucher werden vorzugsweise deaktiviert, insbesondere das Hebewerk **7** und die Handwerkzeugmaschine **6** werden deaktiviert. Beispielsweise kann der Leitstand **22** für ein Eingaben des Benutzers gesperrt werden. Der Anwender kann den Leitstand **22** nicht mehr anheben. Die Handwerkzeugmaschine **6** kann mittels eines Schalters von den Batterien getrennt werden. Das Hebewerk **7** kann in dem Notmodus automatisch auf die geringste Höhe eingefahren werden. Die Werkzeugführung **1** kann in dem Notmodus optische oder akustisch auf den Notmodus hinweisen.

## Patentansprüche

1. Selbstausrichtende Werkzeugführung (1) mit:
einer Halterung (5) zum Fixieren einer Handwerkzeugmaschine (6),
einem Hebewerk (7), auf dem die Halterung (5) montiert ist,
das einen Vortrieb (24) zum Anheben der Halterung (5) parallel zu einer Hubachse (25) und einen Leitstand (22) zum Bedienen des Vortriebs (24) durch einen Anwender aufweist,
einem selbstbalancierenden Fahrwerk (8), das zwei Räder (27) auf einer Radachse (28),
einen mit den Rädern (27) gekoppelten Antrieb (21) und eine Lenkung (20) zum Bedienen des Fahrwerks (8) durch einen Bediener aufweist,
einer Anordnung von elektrischen Batterien (32, 55) zum Versorgen des Vortriebs (24) und des Antriebs (21) mit Strom,
einer Notstromeinrichtung (57), die einen Ladestandsensor (58) zum Bestimmen eines Ladestands der Anordnung von elektrischen Batterien (32, 55) aufweist und einer Deaktivierungseinheit (59), die ansprechend auf ein Unterschreiten einer Notladung durch den Ladestand den Leitstand (22) deaktiviert.

2. Werkzeugführung (1) nach Anspruch 1, **dadurch kennzeichnet, dass** die Notstromeinrichtung (57) das Fahrwerk (8) bei Unterschreiten der Notladung mit Strom versorgend ist.

3. Werkzeugführung (1) nach Anspruch 1 oder 2, **dadurch kennzeichnet, dass** die Notstromeinrichtung (57) das Hebewerk (7) absenkend ist.

4. Werkzeugführung (1) nach einem der vorhergehenden Ansprüche, **dadurch gekennzeichnet, dass** die Notstromeinrichtung (57) bei Unterschreiten der Notladung ein Warnsignal ausgebend ist.

5. Werkzeugführung (1) nach einem der vorhergehenden Ansprüche, **dadurch gekennzeichnet, dass** die Anordnung eine erste Batterie (32), welche unlösbar an der Werkzeugführung (1) montiert ist, und eine zweite Batterie (55), welche von der Werkzeugführung (1) abnehmbar ist, und eine Laderegelung (56) aufweist, wobei die Laderegelung (56) die erste Batterie (32) durch Entladen der zweiten Batterie (55) ladend ist.

6. Werkzeugführung (1) nach einem der vorhergehenden Ansprüche, **dadurch gekennzeichnet, dass** das selbstbalancierende Fahrwerk (8) einen Schwerpunktsensor (34) zum Erfassen einer lateralen Auslenkung (x) des Schwerpunkts (G) des Hebewerks (7) gegenüber der Radachse (28) aufweist und wobei die Lenkung (20) eingerichtet ist, den Antrieb (21) anzusteuern, ein der Auslenkung (x) entgegenwirkendes Drehmoment abzugeben.

7. Steuerungsverfahren für eine Werkzeugführung (1) nach einem der vorhergehenden Ansprüche 1 bis 6 mit den Schritten:
Versorgen des Fahrwerks (8) und des Hebewerks (7) mit Strom aus den Batterien;
Überwachen eines Ladestands der Batterien;
Deaktivieren des Hebewerks (7), wenn der Ladezustand der Batterien (55) unter einen Schwellwert fällt, und in-Betrieb-halten des Fahrwerks (8), wenn der Ladezustand der Batterien unter dem Schwellwert liegt.

8. Steuerungsverfahren nach Anspruch 7, **gekennzeichnet durch** die Schritte:
Ausgeben eines Warnsignals, wenn der Ladezustand der Batterien unter dem Schwellwert liegt.

9. Steuerungsverfahren nach Anspruch 7 oder 8, **gekennzeichnet durch** die Schritte:
Bestimmen eines Ladezustands einer stationären Batterie (32) der Batterien der Werkzeugführung (1);
Laden der stationären Batterie (32) **durch** eine austauschbare Batterie (55) der Batterien, wenn der Ladezustand der stationären Batterie (32) unter einen weiteren Schwellwert fällt.

10. Steuerungsverfahren nach Anspruch 7 bis 9 **dadurch kennzeichnet, dass** der eine Schwellwert und der andere Schwellwert gleich sind.
